# EUROPEAN PATENT APPLICATION

(11) **EP 0 587 329 A2**
(43) Date of publication of application: **16.03.1994**
(21) Application number: 93306537.7
(22) Date of filing: 18.08.1993
(51) Int. Cl.: G06F 15/70

(54) **Image processing system**

(30) Priority: 05.09.1992 GB 9218862
(71) Applicant: INTERNATIONAL BUSINESS MACHINES CORPORATION, Armonk, N.Y. 10504 (US)
(72) Inventor: Turner, Richard William, Andover, Hampshire Sp10 3EY (GB)
(74) Representative: Burt, Roger James, Dr.

(57) **Abstract**

The present invention provides a system and method for processing a sequence of images representing a moving object or feature of interest. The system comprises entry means for entering a next image from the sequence into the system, descriptor means for providing a current description of the feature, and location means for providing an estimate of the location of the feature in the next image. A feature extraction means extracts an area of data from said next image based on the estimate provided by the location means. A feature identification means programmed to compare tne extracted data with the current feature descriptor then determines the location of the feature in said next image, and a presentation means presents historical data describing past locations of the feature. Then an estimating device estimates the position of the feature in a further image, the estimation being performed on the basis of the location of the feature determined by said feature identification means and said historical data provided by the presentation means.

## Description

The present invention relates to the field of motion analysis, which can be loosely defined as the study of moving objects. In particular the present invention relates to the field of biomechanics, which is the study of human motion.

Motion analysis as a science relies on the ability to capture sequences of images of a moving object. Classically, this has been done using movie cameras and photographic film. More recently, however, the data capture has been performed using video camcorders or special purpose solid state imaging systems. These capture images digitally and store the resulting data on magnetic tape.

The images captured by such techniques are of widely varying events, ranging from films of motor vehicle crash tests or films of aerodynamic wind tunnel studies to films of children at play. In the preferred embodiment of the present invention, the images are of athletes, gymnasts and divers performing the various routines and skills that their sport demands.

The number of images per second that must be captured is known as the frame rate. This varies depending on the application from video frame rates (25 to 30 frames per second) up to 12,000 or more frames per second per camera.

One major drawback with current motion analysis systems is that the images gathered must be manually analysed. Usually this means that the images are projected sequentially, and somebody digitises the shape or position of the item of interest. This process is extremely time consuming; for our particular application a dedicated system operator will digitise approximately 60 images per day. Thus, at a frame rate of 1,000 frames per second, approximately 17 operator-days are required to digitise the output resulting from a single second of filming. This is perhaps the largest single drawback limiting the more widespread use of high speed motion analysis systems.

In addition to being time consuming, the task of repetitively digitising large numbers of similar images is rather tedious, and so the process is prone to human errors. These errors adversely affect the quality of the data analysis, and can be hard to detect.

It would be desirable to automate this analysis process by using a computer system. However, there are several problems that have until now made this impractical. These problems can be categorised into two different types. The first type of problem arises from the motion of the object that is to be tracked, and the second type of problem arises from poor image quality, primarily due to noise of various kinds.

### Problems due to object motion

The images obtained from motion analysis systems exhibit a basic tradeoff; the faster the frame rate, the less the movement of the object between frames, but the poorer the quality. Obviously the task of tracking an object is less onerous if that object only moves by a small amount between each frame, and hence there is an advantage in using fast frame rates. However analysis is also simplified as the image quality is increased, but fast frame rates tend to lead to a degeneration in image quality. Slower frame rates can produce better quality images, but the item being tracked may move a substantial distance between frames. Additionally, slow frame rates may lead to the blurring of fast moving objects. Hence it is apparent that some kind of compromise must be made.

Since the object is moving, its position will change with time and it will, therefore move across the image. If the object is accelerating or decelerating, its velocity will change with time and therefore the amount of motion between consecutive images will also change.

If the object is asymmetrical, its apparent shape will change as it moves relative to the camera. As an example consider a car approaching you, at which point you can see the front view. As it passes by, you will see the side view, and as it moves away from you, you will then see the rear view. Another example of an object which changes shape with time is that of a gymnast performing a twisting somersault.

### Problems due to image quality

The primary source of quality problems in captured images is noise. This arises from several sources, for example:
1) sensor pixel noise, due to defects or local problems in the actual camera sensor. This typically leads to small scale intensity variations across an image.
2) sensor readout noise, which arises when sensor pixels are read out in blocks. This causes the whole image to have a 'blocky' appearance.
3) tape noise, caused when the data is written to or read from the magnetic tape.
4) random (spike) noise, which appears as bright or dark pixels in the image.
5) global brightness variations across the images, caused by uneven lighting. This occurs for example when a gymnast passes through a brightly lit filming area.
6) ambient illumination variations, caused by background lighting. If 50Hz mains lighting is present, and a frame rate is used that is a multiple of 50, then a 'strobe' effect with the mains lights appears.

As the frame rate increases, the image quality degrades (the amount of noise increases). Partly, this is because the sensors are starting to be 'pushed' to the limits of their performance, and partly because lighting effects become more critical. As the frame rate increases, each image is exposed for a shorter time, so less light is captured. Any small fluctuations therefore become larger relative to the total amount of light captured, so the signal-to-noise ratio drops.

It is an object of the present invention to provide an image processing system which can handle the above problems and so reliably process large numbers of image frames at high speed.

Accordingly the present invention provides an image processing system for processing a sequence of images representing a moving feature of interest, comprising: entry means for entering a next image from the sequence into the system; descriptor means for providing a current description of the feature; location means for providing an estimate of the location of the feature in the next image; feature extraction means for extracting an area of data from said next image, said area being selected based on the estimate provided by the location means; feature identification means programmed to compare the extracted data with the current feature descriptor to determine the location of the feature in said next image; presentation means for presenting historical data describing past locations of the feature; and an estimating device programmed to estimate the position of the feature in a further image, the estimation being performed on the basis of the location of the feature determined by said feature identification means and said historical data provided by the presentation means.

Viewed from a second aspect the present invention provides a method of processing a sequence of images representing a moving feature of interest, comprising the steps of: (a) entering a next image from the sequence into the system; (b) providing a current description of the featured (c) providing an estimate of the location of the feature in the next image; (d) extracting an area of data from said next image, said area being selected based on the estimate provided at step (c); (e) comparing the extracted data with the current feature descriptor to determine the location of the feature in said next image; (f) presenting historical data describing past locations of the feature; and (g) estimating the position of the feature in a further image, the estimation being performed on the basis of the location of the feature determined at step (e) and said historical data provided at step (f).

The present invention overcomes the above-mentioned problems by using a combination of techniques. Robust feature extraction and identification algorithms are coupled with a sophisticated tracking algorithm in order to solve the problems discussed above.

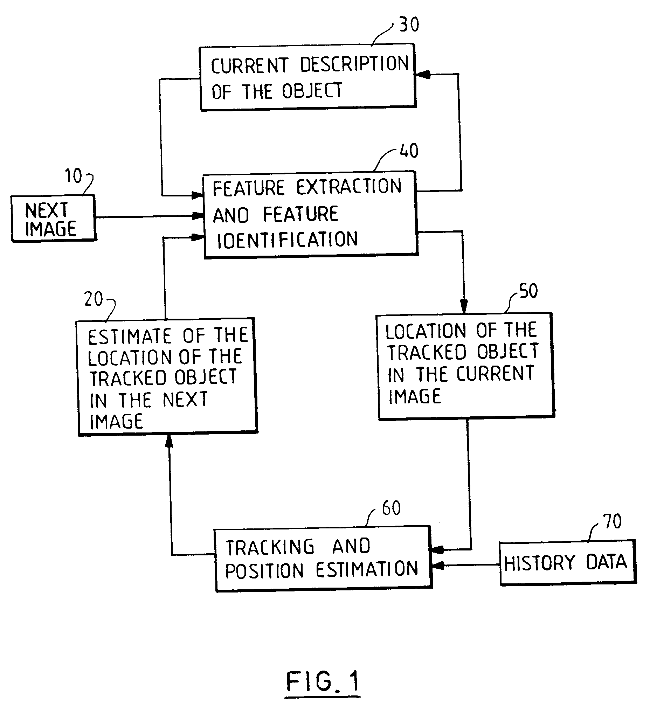

The present invention will now be described, by way of example only, with reference to an embodiment thereof as illustrated in the accompanying Figure 1, which is a flow diagram illustrating how the system of the preferred embodiment operates.

As can be seen from Figure 1, the system operates by performing a number of processes in a loop. At each iteration of the loop, three processes are performed.

Firstly, a feature extraction and identification step 40 is performed. This requires three inputs, namely:
1) a description 30 of the object, or feature of the object, being tracked. In the preferred embodinent a model is used which describes the shape of the object in terms of its edges and their relative positions;
2) the next image 10 in the sequence of images;
3) an estimate 20 of the position in the next image of the feature that is being tracked.

Feature extraction is then performed as described below:
1. The next image 10 is loaded into the system to serve as a current set of data. The feature extraction means then extracts a small sub-image (window) from this data, centred on the estimated position 20 of the feature in the image.
2. This extracted sub-image is then processed using a probabilistic canny edge detection algorithm programmed into the feature extraction means. This yields a list of 'edgels' (small edge fragments). The canny edge detection algorithm is a known algorithm which has been used in the past in machine vision and medical image applications, and so need not be described in detail here.
3. The edgels are processed and an image constructed showing only edges found by the canny algorithm. The importance of an edge is weighted, such that stronger edges are given more importance. The exact weighting given to particular edges will vary depending on the feature being studied, the quality of the image, etc.
4. At this point the created edge image is passed by the feature extraction means to the feature identification means, and also stored to serve as the object descriptor 30 for the next image.

Feature identification is then performed by the following steps:
1. The processed edge image obtained in step 3 above for the previous image is retrieved. This is the object description image 30.
2. The object description image 30 and and the current edge image are compared by the feature extraction means. The comparison is performed by either direct cross-correlation or logical matching if the images are small, and by fourier domain cross-correlation if they are large. Conceptually, this consists of sliding the current edge image across the description image 30. At each relative position the images are compared, and a number is computed that is a measure of how similar the two images are. These techniques will be readily understood by a person skilled in the art and so need not be discussed in any further detail.
3. The output from step 2 is an array of numbers, denoting the similarity of the images at all possible positions. The largest number denotes the most similarity and its position is output as the location 50 of the tracked object in the current image.

The location information 50 output by the feature identification step serves as one input to the tracking section 60 of the system. In the preferred embodiment tracking is performed using a linear estimation algorithm for simple cases, and a Kalman filter for more complex cases, or where image quality is a problem. The Kalman filter is a known filter although its use has been mostly confined to military applications. An article entitled "Tracking and Data Association" by Yaakov Bar-Shalom and Thomas E. Fortmann, Academic Press 1988, describes Kalman filters in detail.

The other input to the tracking section 60 is historical data 70, in this case, the position of the tracked object in previous images. The number of previous positions used varies, more complex motions requiring more previous inputs in order to make an acceptably accurate prediction. Generally, one to five previous positions are used. The location information 50 and the history data 70 are used by the tracking algorithm to generate an estimate of the position of the feature of interest in the next image. In the case of the Kalman filter, an estimate of the error in the position is also output, and this too can form part of the history information to be used in later iterations of the tracking algorithm.

The fact that the object description 30 is stored by the feature extraction algorithm for each image accounts for the ability of the system to track objects whose shape is changing. As the object changes shape, the description is updated continually.

The noise tolerance exhibited by the algorithm is due in part to the use of the canny edge detector for feature extraction, and in part to the use of Kalman filters for tracking. The canny edge detector uses both probabilistic and hysteresis methods to eliminate spurious edges dues to noise.

The Kalman filter uses probabilistic methods to eliminate tracking errors caused by small errors in the location of feature positions; effectively, this amounts to an adaptive smoothing of the positions found. Similar probabilistic methods are used at this stage to minimise errors caused by noise and measurement uncertainty. The filter can calculate measures of the error in both the estimated position and the system state ("how good is the model that I am using to predict this motion") and these too are stored; they serve as inputs to the tracking step for subsequent images.

By employing a system in accordance with the preferred embodiment of the present invention it has been found that large numbers of images can be processed accurately at high speed.

In summary the system of the preferred embodiment has a number of advantages over the manual prior art techniques, namely:
1) the embodiment provides an automated technique for processing large numbers of images.
2) the embodiment uses a technique which can continue to track objects even if their shape changes during filming. As already mentioned this is due to the current description 30 of the object being updated at every iteration of the process.
3) the embodiment can track multiple objects simultaneously. This leads to the possibility of using a parallel computer system to enhance performance.
4) the embodiment uses an algorithm that can continue to track an object even if it is obscured or hidden for a period of time. This is due to the combination of feature location and feature tracking using previous locations.
5) the invention is noise tolerant as already mentioned, and so can work with poor quality image data.

## Claims

1. An image processing system for processing a sequence of images representing a moving feature of interest, comprising:
entry means (10) for entering a next image from the sequence into the system;
descriptor means (30) for providing a current description of the feature;
location means (20) for providing an estimate of the location of the feature in the next image;
feature extraction means (40) for extracting an area of data from said next image, said area being selected based on the estimate provided by the location means (20);
feature identification means (40) programmed to compare the extracted data with the current feature descriptor to determine the location of the feature in said next image;
presentation means (70) for presenting historical data describing past locations of the feature; and
an estimating device (60) programmed to estimate the position of the feature in a further image, the estimation being performed on the basis of the location of the feature determined by said feature identification means (40) and said historical data provided by the presentation means (70).

2. A system as claimed in Claim 1, wherein said feature extraction means (40) is further programmed to process said extracted data using a probabilistic canny edge detection algorithm so as to generate an image showing only edges found by the canny algorithm.

3. A system as claimed in Claim 1 or Claim 2, wherein the output from said feature extraction means (40) is stored in memory to serve as the feature descriptor for said further image.

4. A system as claimed in any of claims 1 to 3, wherein said feature identification means (40) compares the extracted data with the current feature descriptor by fourier domain cross-correlation.

5. A method of processing a sequence of images representing a moving feature of interest, comprising the steps of:
(a) entering a next image from the sequence into the system;
(b) providing a current description of the feature;
(c) providing an estimate of the location of the feature in the next image;
(d) extracting an area of data from said next image, said area being selected based on the estimate provided at step (c);
(e) comparing the extracted data with the current feature descriptor to determine the location of the feature in said next image;
(f) presenting historical data describing past locations of the feature; and
(g) estimating the position of the feature in a further image, the estimation being performed on the basis of the location of the feature determined at step (e) and said historical data provided at step (f).

6. A method as claimed in Claim 5, wherein step (d) further includes the step of processing said extracted data using a probabilistic canny edge detection algorithm so as to generate an image showing only edges found by the canny algorithm.

7. A method as claimed in Claim 5 or Claim 6, wherein the output from step (d) is stored in memory to serve as the feature descriptor for said further image.

8. A method as claimed in any of claims 5 to 7, wherein the comparison in step (e) of the extracted data with the current feature descriptor is performed by fourier domain cross-correlation.
